# EUROPEAN PATENT SPECIFICATION

(11) **EP 3 722 261 B1**
(45) Date of publication and mention of the grant of the patent: **04.12.2024**
(21) Application number: 20164592.6
(22) Date of filing: 20.03.2020
(51) Int. Cl.: C02F 1/42, B01J 49/75, B01J 49/85, B01J 47/022

(54) **A WATER SOFTENER APPARATUS**
EIN WASSERENTHÄRTUNGSGERÄT
UN APPAREIL ADOUCISSEUR D'EAU

(30) Priority: 20.03.2019 GB 201903775
(43) Date of publication of application: 14.10.2020
(73) Proprietor: Harvey Water Softeners Limited, Old Woking, Surrey GU22 9LQ (GB)
(72) Inventor: SARGEANT, William, WOKING, SURREY GU22 7XR (GB)
(74) Representative: Bewley, Ewan Stuart

(56) References cited:
- WO-A1-2009/133251
- GB-A- 2 362 114
- GB-A- 2 363 114
- US-A- 4 313 825
- US-A- 4 539 106
- US-A1- 2013 248 457
- US-B1- 6 287 457

## Description

### Field of the Invention.

The invention relates to a water softener apparatus and to a displacement flow device or meter for use in a water softener apparatus and particularly, but not exclusively, to a displacement type water driven flow-device or meter for controlling valve means of a water softener apparatus.

### Background of the Invention.

A water softener apparatus generally comprises an active resin water softening component that has to be regenerated occasionally by-passing brine through it. Whilst the component is being regenerated it is inoperable to supply softened water. In known domestic water softeners, this problem is ameliorated by arranging for regeneration to take place at a time of likely low demand, for example during the very early morning. Also known are water softeners comprising two softening components which are regenerated during respective different time intervals so that at least one of them is operable all the time, for example as disclosed in US Patent No. 5,273, 070. The apparatus according to this patent comprises an electrically motorized valve arrangement controlled by a microprocessor which is programmed to sequence the operations of the valve arrangement. However, this requires an electrical supply to the water softener which, in some cases, may be inconvenient and/or which may add to the cost of installation of the softener.

US Patent No. 5,681,454 discloses a water treatment apparatus having several water treatment components all but one of which are coupled to respective pressure-controlled valves. The apparatus is intended for use where the demand for treated water may vary, e.g., because different numbers of consumers are using it at any one time, but where each component is most efficient over a particular range of throughput. Accordingly, the valves operate to bring different numbers of the components into operation depending on the demand level. Pressure operated valves are used so as to avoid the need for electronic metering.

Applicant's own prior patent GB2,362,114 discloses a water softener apparatus comprising two water softener tanks and mechanical valve means for causing said two tanks to be rendered inoperable to soften water at respective different intervals so that at least one tank is operable all the time, wherein said valve means comprises water-flow controlled valve means and the apparatus includes a water driven flow-meter for mechanically controlling said valve means. A regeneration meter measures a pre-set volume of water considered necessary to regenerate either of said two tanks.

Currently, many mechanical regeneration systems in water softener apparatuses or the like utilize a displacement type of water driven flow-meter of a kind having a fixed gear train with a fixed gear train ratio where the gear train turns a cam, a valve or the like to initiate a regeneration event, e.g. a water softening cycle. One problem with a water driven flow-meter having a fixed gear train is that, when a gear train is selected and assembled in the water driven flow-meter, it is normally done with reference to a gear train ratio which covers a range of water hardnesses of a water supply line or water supply area as it is known that water hardness levels may vary from one district to another and even from street to street. Fixed gear ratio gear trains for water driven flow-meters used in water regeneration systems of water softener apparatuses are therefore typically arranged to cover a relatively wide range of water hardnesses so that a particular gear train selection can be used to provide flow-meters which will be able to be installed in a relatively large geographical area without further modification. Consequently, the design and assembly of a water driven flow-meter having a fixed gear train ratio for initiating regeneration events in a water softener apparatus is in some respects a compromise between installation efficiency and water softening efficacy. This lack of water softening efficacy may lead to an over-use or under-use of salt, neither of which is desirable. It is possible to improve the water softening efficacy by more accurately tuning the gear train to the hardness level detected in a water supply line or water supply area, but this entails considerable additional costs for a supplier/installer of water softener apparatuses. That being said, it is also known that water hardness in a water supply line or water supply area may vary over time such as over the seasons and/or vary according to local changes in precipitation levels, etc. To address time varying changes using a water driven flow-meter of the type having a fixed gear train would require frequent disassembling of the water softener apparatus so that, on each occasion, a new gear or new gear train could be installed in the water driven flow-meter to thereby change the gear ratio and thus timings of regeneration events to better suit the prevailing level of water hardness. This is, of course, not desirable or feasible in most situations in view of the fact that water softener apparatuses are typically installed close to incoming water mains lines and, as such, are often installed in difficult to access positions, notwithstanding the costs associated with doing so. Furthermore, each time such an apparatus is disassembled and reassembled increases the risks of leaks through damage or misplacement of seals. There is therefore a need for provision of a water softener system or a water softener regeneration system having a displacement type water driven flow-meter or device which can be more easily tuned to a prevailing and time-varying water hardness level in a water supply line or water supply area.

US4539106 uses pegs radially distributed around a meter wheel to enable adjustment of an amount of water necessary to be measured to initiate regeneration of a water softener tank.

US6287457 discloses a regulator with externally operationable setting means with which the start of the regeneration cycle can be adjusted in function of the passed water volume. This comprises a mechanism which is adjustable by rotation of a ring which is coupled to an adjustment button, by means of a toothing at the circumference of the ring, a toothing at a gear wheel, and a shaft.

US2013/248457 discloses a means of incrementally adjusting the amount of water to be measured to initiate regeneration of a water softener tank by relative rotation between first and second meter discs which is resisted by an anti-rotation pawl that engages at least one of the meter discs. At least one of the meter discs includes a disc structure engageable by an external adjustment member which can be manipulated to overcome the force applied by the anti-rotation pawl in order to rotate one meter disc relative to the other meter disc.

US4313825 describes that, while the regeneration cycle is underway, a segment gear is rotating and its teeth come into running mesh with teeth of another gear. This meshing causes rotation of a water volume wheel until the gear teeth of the segment gear and the other gear lose mesh due to missing teeth on the other gear. This comprises an automatic resetting feature of this device. During the resetting of the water volume wheel, a drive pinion also must rotate. This is made possible due to the clutching arrangement. The relationship of the missing teeth on the other gear to a trip finger is adjustable to obtain a volume of water required for a particular installation.

WO2009/133251 discloses a regulator operable from the outside of the water softener with which the start of a regeneration cycle can be regulated according to the quantity of water to be treated. The system for regulating systems comprises a rotary geared element which is engaged by a pinion which is externally accessible for adjusting the rotated position of the rotary element.

### Objects of the Invention.

An object of the invention is to mitigate or obviate to some degree one or more problems associated with known water softener apparatuses.

The above object is met by the combination of features of the main claims; the subclaims disclose further advantageous embodiments of the invention.

One skilled in the art will derive from the following description other objects of the invention. Therefore, the foregoing statements of object are not exhaustive and serve merely to illustrate some of the many objects of the present invention.

### Summary of the Invention.

In a first main aspect, the invention provides a water softener apparatus according to claim 1.

### Brief Description of the Drawings.

The foregoing and further features of the present invention will be apparent from the following description of preferred embodiments which are provided by way of example only in connection with the accompanying figures, of which:
Figure 1 is a simplified diagram showing the components of a water softener and the connections therebetween;
Figures 2 and 3 are two diagrams for explaining the construction and operation of a shuttle valve used in the Figure 1 water softener;
Figures 4 and 5 are two diagrams for explaining the construction and operation of a service meter used in the Figure 1 softener;
Figures 6 and 7 are two diagrams for explaining the construction and operation of a regeneration meter used in the Figure 1 softener;
Figures 8 and 9 are two diagrams for explaining the construction and operation of a brine tank and valve used in the Figure 1 water softener; and
Figure 10 is a diagram of an embodiment of a displacement device according to the present invention;
Figure 11 is a view of a water meter mechanism for the displacement device of Fig. 10;
Figure 12 is an enlarged view of the circled portion of Fig. 10;
Figure 13 is a further enlarged view of the circled portion of Fig. 10;
Figure 14 is a side sectional view of the displacement device of Fig. 10;
Figure 15 is an enlarged sectional view of a top part of the displacement device of Fig. 10;
Figure 16 is a side view of the adjustment knob and a hardness setting gear or dial for the displacement device of Fig. 10; and
Fig. 17 is an enlarged view of the adjustment mechanism for the displacement device of Fig. 10.

### Description of Preferred Embodiments.

The following description is of preferred embodiments by way of example only and without limitation to the combination of features necessary for carrying the invention into effect.

Reference in this specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments, but not other embodiments.

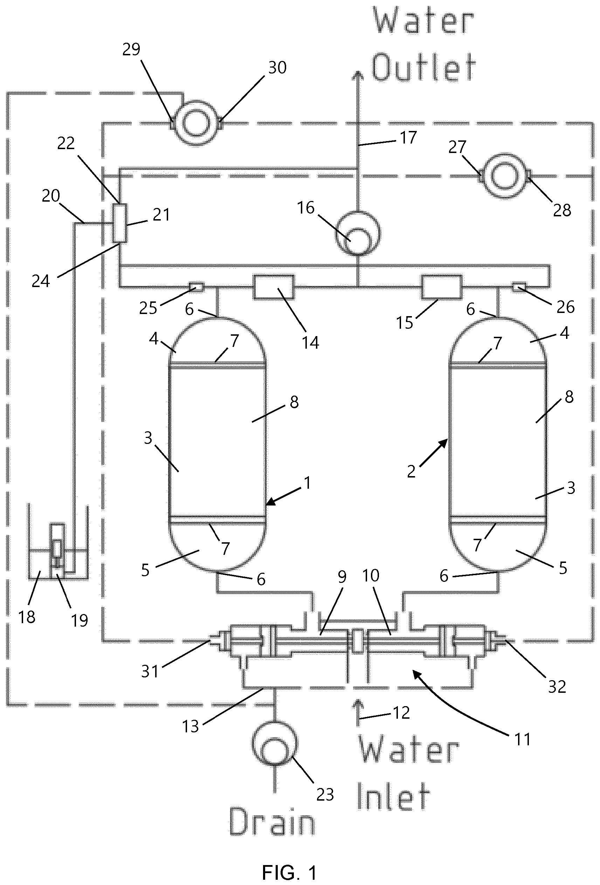

The water softener of Figure 1 comprises two resin tanks 1 and 2. Each tank has a cylindrical central portion 3 and two dome-shaped ends 4 and 5 with, at the centre, a water entry/exit port 6. In one embodiment, the tank is formed in two halves each comprising a dome-shaped end 4 or 5 and half of the cylindrical portion 3. The two halves of the tank are then butt-welded together, i.e. around the centre of the tank. Before this, however, two stainless steel mesh screens 7 are welded into the interior of each half of the tank so that they will separate the dome shaped ends 4 and 5 from the cylindrical portion 3, and this cylindrical portion 3 is filled with the ion exchange resin 8. In use of the water softener, the tanks are positioned upright as shown with water flowing upwards from the port 6 in the lower end 5 of the tank, through the resin 8 and then out of the port 6 in the upper end 4 of the tank when the resin is supplying softened water while, for regeneration, salt water (brine) flows down via port 6 in the upper end 4, through the resin 8, and out of the tank through the port 6 in its lower end.

The ports 6 at the lower ends 5 of the tanks 1 and 2 are connected via respective pipes to respective ones of two chambers 9 and 10 in a shuttle valve 11 to be described later. The valve 11 also has a connection 12 from the supply of water to be softened, e.g. the water mains, and connections 13 to a drain via a regeneration meter 23, there preferably being a fine debris blocking screen (not shown) fitted at that side of the meter 23 which is nearest the connections 13. The regeneration meter 23 forms part of a regeneration system of the apparatus including also valve means to be described and a service meter 16 to be described.

The ports 6 at the upper ends 4 of the tanks 1 and 2 are connected via respective check valves 14 and 15 to a common input of the service meter 16. An output of this meter leads via pipe 17 to the softened water outlet of the softener apparatus. This pipe will be connected in use via a union (not shown) to the user's domestic stored water system (not shown).

The valves 14, 15, 25, 26, 27, 28, 29, 30 are preferably water-controlled valves with the advantage that no electrical power supply is required for the apparatus. However, in some embodiments, electrically or electronically controlled valves may be utilized.

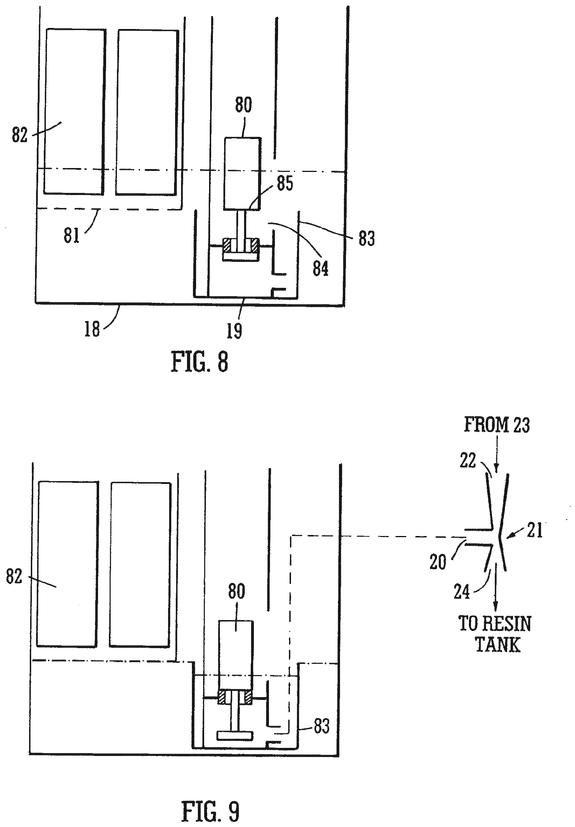

The softener also comprises a brine tank 18 and brine valve 19 connected to an injection input 20 of an injector 21 which also has an input port 22 connected to the softened water outlet pipe 17. An outlet port 24 of the injector 21 leads via respective further check valves 25 and 26 to the ports 6 at the upper ends of the tanks 1 and 2, i.e. so that the port 6 at the top of tank 1 is connected to both check valves 14 and 25 while port 6 at the top of tank 2 is connected to check valves 15 and 26. As shown in Figure 9, the injector 21 comprises a duct between the input and output ports 22 and 24 which duct is shaped to provide a restriction and hence a pressure drop when water is flowing through it from pipe 17. This causes brine from the tank 20 to be sucked into the injector 21 and mixed with the softened water flowing from the outlet port 24.

The service meter 16 is arranged to operate two service valves 27 and 28 while the regeneration meter 23 is similarly coupled to two regeneration valves 29 and 30. The valves 27, 28, 29 and 30 are in turn operable to control the shuttle valve 11. The valve 11 has two control ports 31 and 32. The valve 11 is a servo-valve whose operation is governed by the pressure of water at its two control ports. One port is connected via a suitable conduit, e.g. a relatively narrow bore tube, to an output of the valve 27 and to an output of the valve 29. Meanwhile, the other control input of shuttle valve 11 is connected via a suitable conduit an output of the service valve 28 and an output of the regeneration valve 30.

The service meter 16 measures the flow of softened water supplied by the water softener. The meter operates the service valves 27 and 28 so that each time a predetermined quantity of softened water has been supplied, regeneration of one of the tanks is started. Similarly, during regeneration, the regeneration meter 23 operates via regeneration valves 29 and 30 to set a predetermined quantity of water to pass through the tank being regenerated. During regeneration, brine from tank 18 is mixed with this water for a time (controlled by the brine valve 19). The position of the regeneration meter 23 is important. Previously, it has been known to position the regeneration meter in the pipe leading from the water outlet pipe 17 to the input port 22 of the injector. However, whilst this has been found to be generally effective, it has been found that the regeneration meter 23 is measuring only softened water being fed to the injector port 22 rather than the amount of softened water with injected brine required to flow through the tank 1, 2 being regenerated. As such, in the present embodiments, the water regeneration meter is preferably positioned in the apparatus at a point downstream of where brine for regeneration of the two water softener components is received into the apparatus, i.e. downstream of the injector 21, such that the regeneration meter 23 measures the volume of softened water and brine being used to regenerate one of the tanks 1, 2. This provides a more accurate operation of the regeneration meter in terminating alternate regeneration of the tanks 1, 2. Unexpectedly, it has been found that positioning the regeneration meter 23 adjacent to the shuttle valve 11 and, more particularly, at the drain provides the advantage that the regeneration meter 23 acts also to ensure all water to the drain is recorded. This in turn ensures that any error state that occurs in any of the valves does not cause excess volume of water to be lost down the drain. In short, the regeneration meter 23 not only operates to terminate alternate regeneration of the tanks 1, 2, but also acts as a fail-safe mechanism for the valve means of the apparatus.

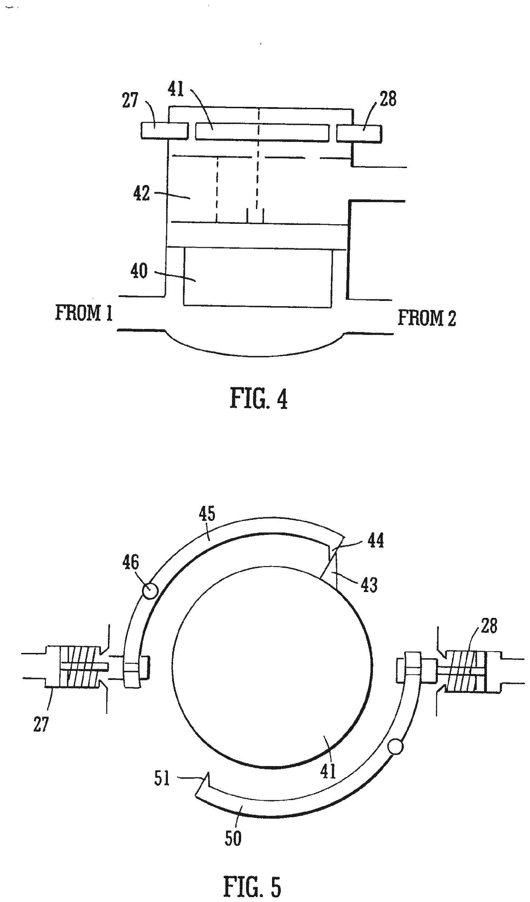

As shown in Figures 4 and 5, softened water from both tanks 1 or 2 enters the meter 16 and passes through the metering chamber 40. This metering chamber contains a piston type water meter which measures accurately the volume of water passing through to the outlet pipe 17. The meter chamber drives the service meter cam 41 via a series of gears 42. One rotation of the service meter cam is equivalent to the pre-set volume of water that may be softened by both resin tanks.

As the service meter cam 41 rotates anticlockwise the blade 43 on the service cam pushes a blade 44 on the service lever 45 so that the lever 45 moves about the pivot 46 which levers open the service valve 27 enabling a water pressure signal to flow from the meter to the shuttle valve port 29.

As softened water continues to flow through the meter the blade 24 wipes past the lever blade 43 and closes the service meter valve 'locking in' the water pressure to the shuttle valve port 31. The volume of water required to wipe the blades past each other is less than the pre-set volume of water required to regenerate a resin tank.

Service lever 45 operates service valve 27 and starts the regeneration of resin tank 1. Similarly, service lever 50 with blade 51 operates service valve 28 and applies a pressure signal to shuttle valve port 32 to start the regeneration of resin tank 2. The lever blades 44 and 45 are positioned at 180 degrees to each other, therefore, the regeneration of either tank is 50% of the pre-set volume of one rotation of the service meter cam. The pre-set volume may be altered by changing the ratio of the gear chain between the meter chamber and the service cam.

The regeneration meter 23 measures the pre-set volume of softened water and brine necessary to regenerate either resin tank 1 or 2. After the pre-set volume of regeneration water with brine has passed through the meter it stops the regeneration.

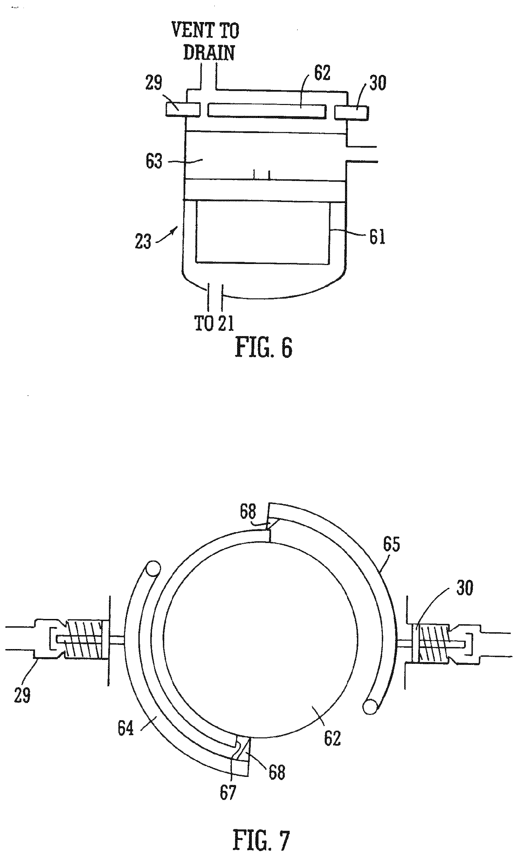

As shown in Figures 6 and 7, softened water enters the metering chamber 61 of the regeneration meter 23 and flows through the metering chamber 61. This chamber again contains a piston type water meter which accurately measures the volume of water passing through the meter chamber. The meter chamber drives the regeneration cam 62 via a series of gears 63. Half a rotation of the regeneration meter cam is equivalent to the pre-set volume of water with entrained brine necessary to regenerate one resin tank.

At the start of the regeneration of resin tank 1 the regeneration meter cam 62 is positioned so that regeneration lever 64 is 'free' and therefore regeneration valve 29 is closed. This 'locks in' the pressure signal from the service valve 27 which opens drain shuttle valve port 31. The regeneration meter cam has pushed open the regeneration valve 30 via lever 65, this prevents resin tank 2 from regenerating at the same time as resin tank 1 by venting any pressure signal to drain shuttle valve port 32.

As regeneration water with brine passes through the regeneration meter 23 the cam 62 rotates clockwise until, at the end of the regeneration, the lever blade 68 on lever 65 drops off the rear step of the cam 62. Lever 65 is now free to let the spring close valve 30. The cam 62 continues to rotate anticlockwise. The front step 67 of the cam 62 pushes the blade 68 on lever 64 which opens valve 29. Opening valve 29 vents to drain the water pressure holding open drain shuttle valve port 31 so that the drain shuttle A then closes.

Regeneration lever 64 operates regeneration valve 29 and stops the regeneration of resin tank 1. Regeneration lever 65 operates regeneration valve 30 and stops the regeneration of resin tank 2. The lever blades are positioned at 180 degrees to each other, therefore the volume of regeneration water with brine for each tank is 50% of the pre-set water volume necessary to rotate the regeneration cam once. The pre-set volume may be altered by changing the gear ratio between the meter chamber and the regeneration cam.

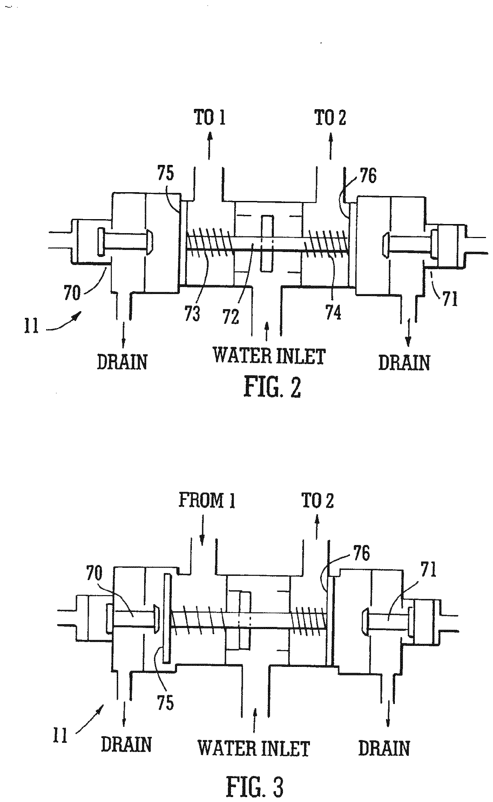

Referring to Figures 2 and 3, the shuttle valve 11 distributes inlet water equally between resin tanks 1 and 2 when both tanks are in service and diverts hard water to either resin tank 1 or 2 during regeneration. It also enables regeneration water from either resin tank 1 or 2 to flow to drain where such water volume is preferably measured by the regeneration meter 23.

In the service position hard water flows through the valve to both resin tanks 1 and 2. Drain shuttles 70 and 71 are held closed. The shuttle valve 11 comprises a housing defining chambers connected to the respective resin tanks. A shuttle 72 is mounted in the housing. it comprises a spindle with two pistons 75 and 76 at its ends and a central valve member. The shuttle 72 is held in a central position by the springs 73 and 74 which are of equal strength and oppose each other.

The regeneration of resin tank 1 is started by a water pressure signal from the service valve 27 which opens drain shuttle 70. The path of water to flow to drain is now open, the flow of water to drain now pushing across piston 75 and closing the valve seal on its seat. Hard water can only now flow to resin tank 1 for softening. The regeneration water now flows from resin tank 1 past piston 75 through the open drain shuttle and then to drain.

When regeneration valve 1 opens the water pressure signal opening drain shuttle 70 is vented to draw in allowing water pressure to push drain shuttle 70 back to the closed position which equalizes the water pressure in resin tanks 1 and 2 enabling the shuttle to return to a central service position; hard water again now flows to both resin tanks, that is the shuttle valve has returned to its service position.

The regeneration of resin tank 2 is the same operation but uses drain shuttle 71 and piston 76 etc.

As shown in Figures 8 and 9, softened water fills the brine tank 18 via the brine valve 19 until shut off by the brine valve float 80 to a level above the platform 81. The salt 82 is gradually dissolved in the water producing brine.

During the regeneration of a resin tank softened water flows through the injector 21 from the inlet 22 to the outlet 24 producing a partial vacuum at the suction point in the injector 21 which draws brine from the brine tank as shown. The brine is mixed with the water flowing through the injector which then flows to the resin tank in regeneration and ultimately through the regeneration meter 23.

Brine continues to be sucked from the brine tank until the brine level stops filling when it reaches the height of the walls of a cup-shaped weir 85. The level continues to fall in the weir chamber 84 until it reaches a point which enables the upper seal 85 to check shut and no more brine is sucked from the brine tank. Water continues to flow through the injector to flush any brine to drain from the resin tank.

When the softener returns to the service position the brine tank again refills with water until shut off by the brine valve float.

The amount of brine being capable of being sucked from the brine tank may be adjusted by raising or lowering the brine valve relative to the weir. This raises or lowers the shut off point of the water refilling the brine tank, thus adjusting the volume of brine.

Placing the meter 23 adjacent to the shuttle valve 11 and, more particularly, at the drain is such that, in most failure events of excess water to drain, the water is captured and registered by the meter 23 thereby driving the regeneration cam 62 via the series of gears 63. Rotating the regeneration cam 62 via the series of gears 63 opens the regeneration lever 64 which in turn releases the lock pressures on regeneration valves 29, 30 freeing any unwanted back pressure on a diaphragm of the meter 23 from unusual sight conditions or machine malfunctions. Removing the back pressure ensures valves associated with drain are firmly shut and no water is flowing to drain.

REGENERATION OF TANK 1 After a predetermined volume of water has passed through the softener as recorded by the service meter 16, service valve 27 opens and a pressure water signal is delivered to drain shuttle 70, opening it. The open drain shuttle 70 opens a path for water to flow to the drain. Water in chamber 9 pushes the shuttle 72 across a shown in Figure 3, stopping hard water flow to resin tank 1. All hard water flow is directed to resin tank 2 which softens all the water now passing through the softener. Soft water flows from pipe 17 to the injector 21 which sucks brine from the brine tank via the brine valve. The brine solution passes through the regeneration check valve 25 and into the top of resin tank 1. Service check valve 14 closes, stopping softened water from resin tank 2 from entering resin tank 1. The brine solution flows down through resin tank 1 and regenerates the cation ion exchange resin in the resin tank. The brine solution then passes through chamber 9 and then via the regeneration meter 23 to drain.

REGENERATION OF TANK 2 After a predetermined volume of water has passed through the softener as recorded by the service meter 16, service valve 28 opens and a pressure water signal is directed to drain shuttle 71, opening it. The open drain shuttle 71 opens a path for water to flow to the drain. Water in chamber 70 pushes the shuttle 72 across as shown in Figure 1, stopping hard water flow to resin tank 1. All hard water flow is directed to resin tank 1 which softens all the water now passing through the softener. Soft water flows from pipe 17 to the injector 21 which sucks brine from the brine tank via the brine valve. The brine solution passes through the regeneration check valve 26 and into the top of 12 resin tank 2. Service check valve 15 closes, stopping softened water from resin tank 1 from entering resin tank 2. The brine solution flows down through resin tank 1 and regenerates the cation ion exchange resin in the resin tank. The brine solution then passes through chamber 10 and then via the regeneration meter 23 to drain.

According to the invention, the regeneration system comprising the service meter 16, regeneration meter 23 and the valves 14, 15, 25, 26, 27, 28, 29 and 30 is implemented in a single system comprising parts of a displacement type flow device or meter (hereinafter a "displacement meter") as described below.

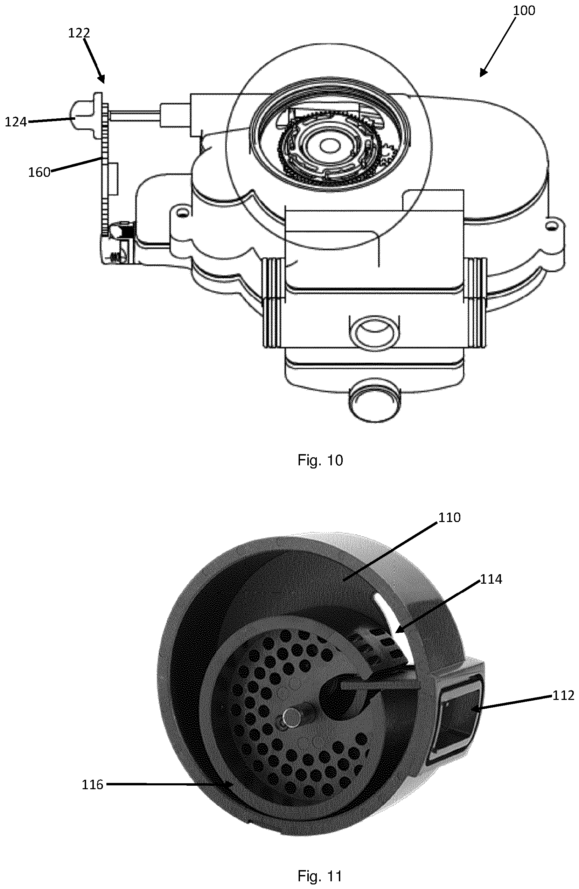

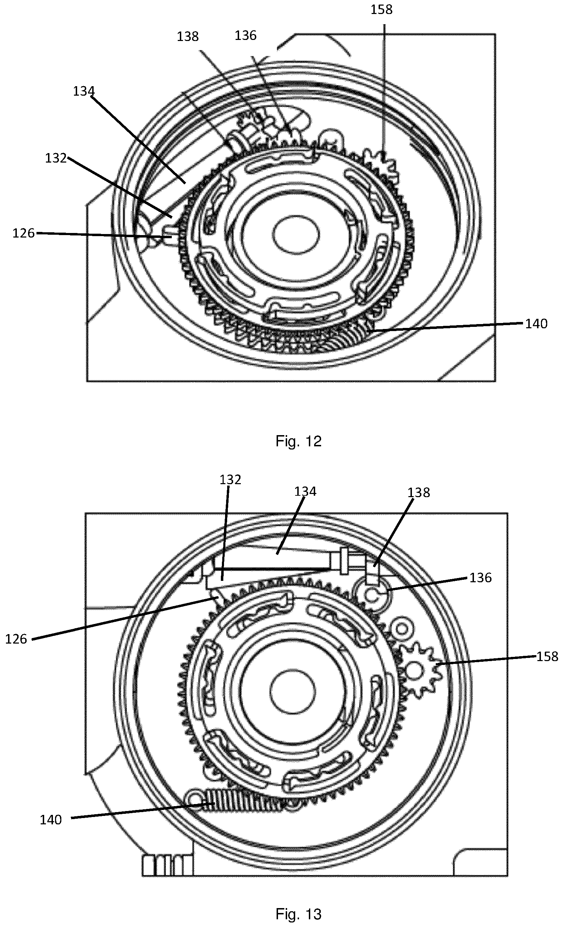

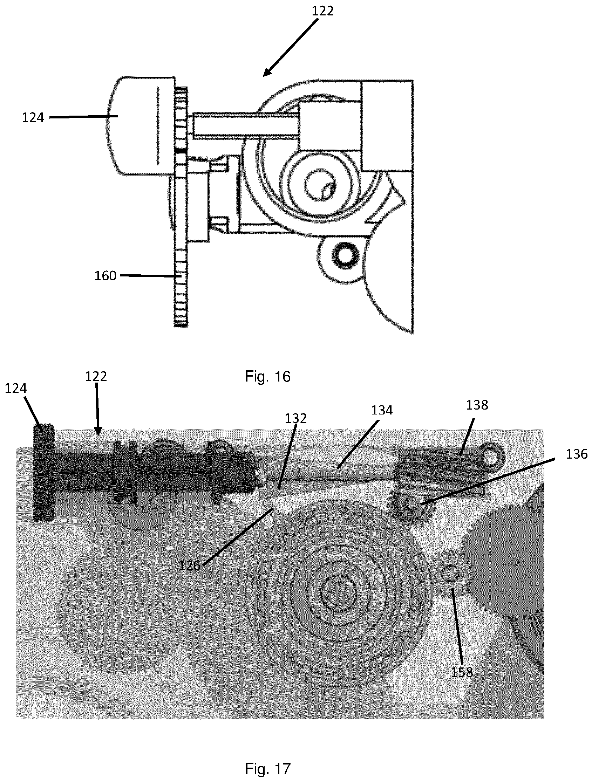

Referring to Figures 10 to 17, shown is an embodiment of a displacement meter 100 according to the present invention. The circled portion of the displacement meter 100 in Fig. 10 is more clearly seen in enlarged form in Figs. 12 and 13. The displacement meter 100 embodies at least the service meter 16 and regeneration meter 23 of Figs. 1 to 9.

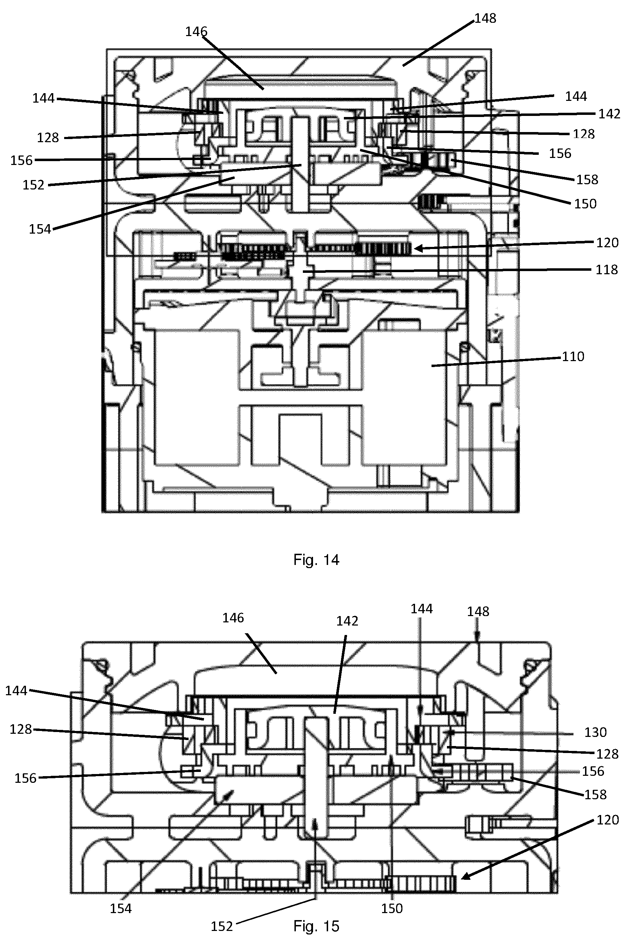

The displacement meter 100 encloses a chamber 110 (Fig. 11) for receiving a flow of fluid which, in the case of a water softener apparatus including the displacement meter 100, would comprise water. The chamber 110 has a fluid inlet 112 and a fluid outlet 114. The chamber 110 includes a first mechanism 116 driven by fluid flowing in through the inlet 112 towards the outlet 114. A predetermined finite volume of fluid causes the first mechanism 116 to complete one revolution around the chamber 110. The revolving first mechanism 116 is arranged to drive a shaft or centre drive dog 118 (Fig. 14) which may be linked by a spur gear train 120 (Fig. 14) or the like to a mechanism for metering the number of finite volumes of water which have passed through the chamber 110. The first mechanism 116 is therefore configured to detect and/or meter an amount of fluid flowing through the chamber 110 over time. The first mechanism 116 comprises at least part of the service meter 16 of Figs. 1 to 9.

The configuration of the chamber 110 and the first mechanism 116 as shown in Fig. 11 is provided by way of example only. It will be understood that other configurations of displacement type flow device chambers and metering mechanisms may be utilized in embodiments of the present invention.

An adjuster mechanism 122 (Figs. 10, 16 and 17) enables the number of finite volumes of fluid being detected/metered to be adjusted such that more or less finite volumes need to be detected/metered to trigger a regeneration event or the like for harder or softer water dependent on the position of an adjuster knob 124 of the adjuster mechanism 122. In other words, it is possible to use the adjustment mechanism 122 to adjust the amount of metered/detected water flowing through the chamber 110 required to trigger a water softener apparatus regeneration event without requiring any disassembly of the displacement meter 100 to change gear train ratios or the like.

The number of finite volumes of water which is detected/metered is related to the stroke length of a guide member (hereinafter "cam" 126) (Figs. 12 and 13) of a service follower disc 128 (Figs. 14 and 15) of a second mechanism 130 when it passes along a snail tooth 132 of a snail cam 134 of the adjuster mechanism 122. The second mechanism 130 is driven by the first mechanism 116 for triggering or initiating an event such as a water softener component regeneration cycle in response to the detection and/or metering of a selected or calculated amount of fluid flowing through the chamber 110 of the displacement meter 100.

The centre drive dog 118 causes rotation of the spur gear train 120 positioned just above the chamber 110. The spur gear train 120 has a fixed gear ratio. The spur gear train 120 causes rotation of a worm gear 136 which rotates a slideable spur gear 138 causing rotation of the snail cam 134. The slideable spur gear 138 is mounted on the snail cam 134. Rotation of the snail cam 134 in turn causes the cam 126 of the service follower disc to move along the surface of the snail tooth 132 of the snail cam 134 thus rotating the service follower disc 128 in what can be considered a forward direction of rotation. As the service follower disc cam 126 moves along the snail cam 134, tension is built up in a biasing means such as a tension spring 140. In Figs. 12 and 13, the cam 126 is shown near the end of its stroke such that the cam 126 is about to fall off the snail profile. When the cam 126 does fall off the surface of the snail tooth 132 of the snail cam 134, the tension spring 140 returns the cam 126 to a position near a lower end of the snail cam 134 adjacent to the slideable spur gear 138. Thus, when the cam 126 falls off the end of the snail tooth 132, the spring 140 causes the service follower disc 128 to return, i.e. to be retracted by the spring 140, to its former position with the cam 126 now contacting the snail tooth 132 at or near its base point, i.e. at an end of the snail tooth 132 closest to the slidable spur gear 138.

As the service follower disc 128 rotates in the forward direction of rotation, a first ratchet and pal mechanism 142 engages a service drive disc 144 and also drives this forward in the same forward direction of rotation. Once the service drive disc 144 has been rotated in said forward direction of rotation by a sufficient amount, it causes triggering or initiation of an event such as a regeneration event. However, it should be noted that, when the service follower disc 128 is retracted by the spring 140, the service drive disc 144 is not retracted, but retains the rotated position it has gained. Consequently, the service drive disc 144 which has just been rotated by an amount by the service follower disc 128 does not retract its position but retains its rotated position during the time that the service follower disc 128 retracts.

Each time the service follower disc 128 is rotated in the forward direction of rotation, it causes the service drive disc 144 to also rotate by an amount related to the adjustable stroke length of the service follower disc cam 126.

As the service drive disc 144 rotates, it moves along a second ratchet and pal system 146 with a gearbox lid 148. It also engages a contact key feature of a control disc 150 thus rotating the control disc 150 around a centre pin 152. The service drive disc 144 directly drives the control disc 150 and a ceramic disc 154 and together these can be considered as comprising the second mechanism 130. As the control disc 150 rotates pressure from a pressure feed hole and drain pressure from a drain pressure feed hole are distributed to relevant valves in the water softener apparatus. The control disc 150 and the ceramic disc 154 are arranged such that, for a set amount of forward rotation, they trigger one or more events such as regeneration events. Consequently, the triggering of events is directly related to the number of strokes needed to be made by the cam 126 of the service follower disc 128 to cause, via the service drive disc 144, a set amount of rotation of the control drive disc 150 and the ceramic disc 154 to trigger events. By inference, there is a direct relationship between the adjustable number of the finite volumes of water flow needed to complete one stroke of the cam 126 of the service follower disc 128 to the triggering of a regeneration or like event, i.e. the number of strokes made by the service follower disc 128 to cause a pre-set amount of rotation of the service drive disc 144 is adjustable and thus the metered volume of water required to trigger a regeneration event is adjustable by means of manually adjusting the adjuster knob 124 of the adjustment mechanism 122.

When the service follower disc 128 is retracted by the tension spring 140, it is able to slip past the service drive disc 144 due to the first ratchet and pal mechanism 142. The service drive disc 144 however is unable to retract due to the second ratchet mechanism 146 engagement with the gearbox lid 148 which prevents the service drive disc 144 from moving backwards. Consequently, the service drive disc 144 only counts forward.

Once the first mechanism 116 has metered water flow of a certain adjusted amount, this causes the second mechanism 130 to trigger a regeneration event. In response, a regeneration drive disc 156 is activated by a signal from the ceramic disc 154 and caused to rotate. The regeneration disc 156, which is independent of the service drive disc 144, takes over control and now directly drives the ceramic disc 154 due to a regeneration spur gear train 158 with a higher gear ratio, i.e. a faster gear train, than the spur gear train 120. Once the regeneration disc 156 moves the control disc 150 through a predetermined amount of rotation, it stops. Meanwhile, any service water that has gone through the water softener component in operation will still be counted by the first mechanism 116 such that the service drive disc 144 will be rotated far enough to catch up with the rotated position of the regeneration disc 156 and will take over driving the ceramic disc 154. The above process is continually repeated with the only alteration being any adjustment made to the amount of water required to trigger a regeneration event using the adjustment mechanism 122.

As indicated above, to make an adjustment, the adjuster knob 124 is accessible at an exterior of the water softener apparatus and, when the knob 124 is rotated, this causes backward or forward movement of the snail cam 134 relative to the service follower disc 128 (leftwards and rightwards movement when viewed in Fig. 13). An adjusted position of the snail cam 134 relative to the service follower disc 128 results in a different stroke starting position for the service follower disc cam 126 on the surface of the snail cam 134 which therefore requires more or less pushes to the control disc 150 and the ceramic disc 154 to trigger a regeneration event dependent on the degree of adjustment of the adjustment mechanism 122. Therefore, it is possible to manually and/or mechanically tune the water softener apparatus to the water hardness level of the local water supply and to make such adjustments as and when necessary as the water hardness level changes over time. In one embodiment, as the adjuster knob 124 is rotated, it turns an external gear or dial 160 which displays a hardness setting (ppm) to the user. Consequently, it is possible for a domestic user to make an adjustment in response to notice or publication of a changed water hardness level in their area rather than being required to test the water hardness of their water supply. The adjuster mechanism 122 therefore varies an operating parameter of said second mechanism 130 for varying the selected or calculated amount of fluid required for triggering an event such as a regeneration event and does so infinitely over a defined range of adjustment.

In the context of the present description, the term gear, gear train, gear mechanism or gear system may generally relate to one or more gears of any known configurations, which may include, but not limited to, a spur gear, a worm gear, a helical gear, a double helical gear, a skew gear, a crown gear, an external gear, or an internal gear, etc.

While the invention has been illustrated and described in detail in the drawings and foregoing description, the same is to be considered as illustrative and not restrictive in character, it being understood that only exemplary embodiments have been shown and described and do not limit the scope of the invention as defined in the appended claims. The illustrative embodiments are not exclusive of each other or of other embodiments not recited herein.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

It is to be understood that, if any prior art publication is referred to herein, such reference does not constitute an admission that the publication forms a part of the common general knowledge in the art.

## Claims

1. A water softener apparatus comprising:
two resin containing water softener tanks (1, 2) each having an upper port (6) and a lower port (6), the lower ports (6) of the two water softener tanks (1, 2) being connected via respective chambers (9,10) of a shuttle valve (11) to a water inlet (12) providing a supply of water to be softened, said lower ports (6) also being connected via a connection (13) of the shuttle valve (11) to a drain via a regeneration meter (23) that forms part of a regeneration system for alternately regenerating said two water softener tanks (1, 2), the upper ports (6) of the two water softener tanks (1, 2) being connected via respective check valves (14, 15) to a common input of a water driven flow-meter (16) with an output of said water driven flow-meter (16) leading via a softened water outlet pipe (17) to a softened water outlet of the water softener apparatus;
a brine tank (18) and a brine valve (19) connected to an injection input (20) of an injector (21) which has an input port (22) connected to the softened water outlet pipe (17) and an outlet port (24) leading via further respective check valves (25, 26) to the upper ports (6) of the two water softener tanks (1, 2), the injector (21) comprising a duct between the inlet port (22) and the outlet port (24) shaped to provide a restriction which causes brine from the brine tank (18) to be sucked into the injector (21) and mixed with softened water flowing from the outlet port (24), said softened water being received at the input port (22) of the injector (21) from the softened water outlet pipe (17);
the water driven flow-meter (16) configured to control two service valves (27, 28) to cause said two water softener tanks (1, 2) to be rendered inoperable to soften water at respective different intervals so that at least one water softener tank (1, 2) is operable all the time, the two service valves (27, 28) being operable to control the shuttle valve (11) through respective control ports (31, 32) of the shuttle valve (11), said water driven flow-meter (16) configured for measuring a flow of water such that each time a predetermined quantity of water has been measured, regeneration of one of the tanks is initiated;
said water driven flow-meter (16) being comprised in a water displacement meter (100) which also embodies the regeneration meter (23) and includes an adjustment mechanism (122) for adjusting the amount of the predetermined quantity of water required to be measured to initiate regeneration of one of the water softener tanks (1, 2), the water displacement meter (100) enclosing a chamber (110) for receiving a flow of water, the chamber (110) having an inlet (112) and an outlet (114), the chamber (110) having a first mechanism (116) forming part of the water driven flow-meter (16) driven by water flowing in through the inlet (112) towards the outlet (114) whereby a predetermined finite volume of water flowing through the inlet (112) towards the outlet (114) causes the first mechanism (116) to complete one revolution around the chamber (110) to thereby meter an amount of fluid flowing through the chamber (110) over time, wherein a number of the finite volumes of water which is metered is related to a stroke length of a guide member (126) of a service follower disc (128), the service follower disc (128) is comprised in a second mechanism (130) of the water displacement meter (100) to initiate regeneration of one of said two water softener tanks (1, 2) by the regeneration meter (23) in response to the metering of a selected or calculated amount of water flowing through the chamber (110) of the displacement meter (100), the adjustment mechanism (122) comprising a rotatable snail cam (134) rotated by the first mechanism (116) through a gear mechanism (118, 120, 136, 138) which causes the guide member (126) of the service follower disc (128) to move along a surface of a snail tooth (132) of the rotatable snail cam (134) to rotate the service follower disc (128) in a forward direction until the guide member (126) falls off the surface of the snail tooth (132), wherein a biasing means (14) causes the service follower disc (128) to counter-rotate and
return to a starting position with the guide member (126) contacting the snail tooth (132) at or near a base point of the snail tooth (132), the second mechanism (130) including a first ratchet and pal mechanism (142) driven by the service follower disc (128), said ratchet and pal mechanism (142) engaging a service drive disc (144) to rotate it in the same forward direction as the service follower disc (128) such that, once the service drive disc (144) has been rotated in the forward direction by a sufficient amount, it initiates regeneration of one of the water softener tanks (1, 2);
wherein the service drive disc (144) is configured to move along a second ratchet and pal system (146) with a gearbox lid (148), and to retain its forward rotated position when the service follower disc (128) counter-rotates due to the second ratchet and pal system (146) with gearbox lid (148) being configured to prevent the service drive disc (144) from moving backwards;
the service drive disc (144) further configured for directly driving a control disc (150) and a ceramic disc (154) of the second mechanism (130) which are arranged such that, for a set amount of rotation, they trigger a regeneration event;
wherein the amount of the predetermined quantity of water required to be measured to initiate regeneration of one of the tanks (1, 2) is related to the stroke length of the guide member (126) along the snail tooth (132);
wherein an adjustment knob (124) of the adjustment mechanism (122) is configured to rotate and cause a backward or forward movement of the snail cam (134) relative to the service follower disc (128) to adjust the position of the snail cam (134) relative to the service follower disc (128) resulting in a different stroke starting position of the guide member (126) along the surface of the snail tooth (132); and
wherein the adjustment mechanism (122) is infinitely adjustable within a predetermined range of adjustment.

2. The water softener apparatus according to claim 1, wherein the adjustment mechanism (122) is manually adjustable from an exterior of the water softener apparatus.

## Patentansprüche

1. Wasserenthärtungsanlage, die Folgendes umfasst:
zwei harzhaltige Wasserenthärtungstanks (1, 2), die jeweils eine obere Öffnung (6) und eine untere Öffnung (6) aufweisen, wobei die unteren Öffnungen (6) der beiden Wasserenthärtungstanks (1, 2) über jeweilige Kammern (9, 10) eines Wechselventils (11) mit einem Wassereinlass (12) verbunden sind, der eine Versorgung mit zu enthärtendem Wasser bereitstellt, wobei die unteren Öffnungen (6) auch über einen Anschluss (13) des Wechselventils (11) mit einem Abfluss über einen Aufbereitungsmesser (23) verbunden sind, der einen Teil eines Aufbereitungssystems zum abwechselnden Aufbereiten der beiden Wasserenthärtungstanks (1, 2) bildet, wobei die oberen Öffnungen (6) der beiden Wasserenthärtungstanks (1, 2) über jeweilige Rückschlagventile (14, 15) mit einem gemeinsamen Eingang eines wasserbetriebenen Durchflussmessers (16) verbunden sind, wobei ein Ausgang des wasserbetriebenen Durchflussmessers (16) über eine Auslassleitung (17) für enthärtetes Wasser zu einem Auslass für enthärtetes Wasser der Wasserenthärtungsanlage führt;
einen Soletank (18) und ein Soleventil (19), das mit einem Einspritzeingang (20) eines Injektors (21) verbunden ist, der eine mit der Auslassleitung (17) für enthärtetes Wasser verbundene Eingangsöffnung (22) und eine Auslassöffnung (24) aufweist, die über weitere jeweilige Rückschlagventile (25, 26) zu den oberen Öffnungen (6) der beiden Wasserenthärtungstanks (1, 2) führt, wobei der Injektor (21) eine Rohrleitung zwischen der Einlassöffnung (22) und der Auslassöffnung (24) umfasst, die so geformt ist, dass sie eine Verengung bildet, die bewirkt, dass Sole aus dem Soletank (18) in den Injektor (21) gesaugt und mit dem aus der Auslassöffnung (24) fließenden enthärteten Wasser gemischt wird, wobei das enthärtete Wasser an der Einlassöffnung (22) des Injektors (21) von der Auslassleitung (17) für enthärtetes Wasser empfangen wird;
wobei der wasserbetriebene Durchflussmesser (16) so konfiguriert ist, dass er zwei Betriebsventile (27, 28) steuert, um zu bewirken, dass die beiden Wasserenthärtungstanks (1, 2) außer Betrieb gesetzt werden, um Wasser in jeweils unterschiedlichen Intervallen zu enthärten, so dass mindestens ein Wasserenthärtungstank (1, 2) die ganze Zeit über betriebsbereit ist, wobei die beiden Betriebsventile (27, 28) betätigbar sind, um das Wechselventil (11) über jeweilige Steueranschlüsse (31, 32) des Wechselventils (11) zu steuern, wobei der wasserbetriebene Durchflussmesser (16) so konfiguriert ist, dass er einen Wasserfluss misst, so dass jedes Mal, wenn eine vorbestimmte Wassermenge gemessen wurde, die Aufbereitung eines der Tanks eingeleitet wird;
wobei der wasserbetriebene Durchflussmesser (16) in einem Wasserverdrängungsmesser (100) enthalten ist, der auch den Aufbereitungsmesser (23) verkörpert und einen Einstellmechanismus (122) zum Einstellen der Menge der vorbestimmten Wassermenge enthält, die gemessen werden muss, um die Aufbereitung eines der Wasserenthärtungstanks (1, 2) einzuleiten, wobei der Wasserverdrängungsmesser (100) eine Kammer (110) zur Aufnahme eines Wasserstroms umschließt, wobei die Kammer (110) einen Einlass (112) und einen Auslass (114) aufweist, wobei die Kammer (110) einen ersten Mechanismus (116) aufweist, der einen Teil des wasserbetriebenen Durchflussmessers (16) bildet, der durch Wasser angetrieben wird, das durch den Einlass (112) in Richtung des Auslasses (114) fließt, wodurch ein vorbestimmtes endliches Volumen an Wasser, das durch den Einlass (112) in Richtung des Auslasses (114) fließt, bewirkt, dass der erste Mechanismus (116) eine Umdrehung um die Kammer (110) herum vollendet, um dadurch eine Menge an Fluid zu messen, die über die Zeit durch die Kammer (110) fließt, wobei eine Anzahl der endlichen Wasservolumina, die gemessen werden, mit einer Hublänge eines Führungselements (126) einer Betriebsmitnehmerscheibe (128) in Beziehung steht, wobei die Betriebsmitnehmerscheibe (128) in einem zweiten Mechanismus (130) des Wasserverdrängungsmessers (100) enthalten ist, um die Aufbereitung eines der beiden Wasserenthärtungstanks (1, 2) durch den Aufbereitungsmesser (23) in Reaktion auf das Messen einer ausgewählten oder berechneten Wassermenge, die durch die Kammer (110) des Verdrängungsmessers (100) fließt, einzuleiten, wobei der Einstellmechanismus (122) einen drehbaren Schneckennocken (134) umfasst, der durch den ersten Mechanismus (116) über einen Getriebemechanismus (118, 120, 136, 138) gedreht wird, der bewirkt, dass sich das Führungselement (126) der Betriebsmitnehmerscheibe (128) entlang einer Oberfläche eines Schneckenzahns (132) des drehbaren Schneckennockens (134) bewegt, um die Betriebsmitnehmerscheibe (128) in einer Vorwärtsrichtung zu drehen, bis das Führungselement (126) von der Oberfläche des Schneckenzahns (132) abfällt, wobei ein Vorspannmittel (14) bewirkt, dass sich die Betriebsmitnehmerscheibe (128) gegenläufig dreht und in eine Ausgangsposition zurückkehrt, in der das Führungselement (126) den Schneckenzahn (132) an oder in der Nähe eines Basispunkts des Schneckenzahns (132) berührt, wobei der zweite Mechanismus (130) einen ersten Sperrklinkenradmechanismus (142) umfasst, der von der Betriebsmitnehmerscheibe (128) angetrieben wird, wobei der Sperrklinkenradmechanismus (142) in eine Betriebsantriebsscheibe (144) eingreift, um sie in der gleichen Vorwärtsrichtung wie die Betriebsmitnehmerscheibe (128) zu drehen, so dass, sobald die Betriebsantriebsscheibe (144) in der Vorwärtsrichtung um eine ausreichenden Betrag gedreht worden ist, sie die Aufbereitung eines der Wasserenthärtungstanks (1, 2) einleitet;
wobei die Betriebsantriebsscheibe (144) so konfiguriert ist, dass sie sich entlang eines zweiten Sperrklinkenradsystems (146) mit einem Getriebedeckel (148) bewegt und ihre vorwärts gedrehte Position beibehält, wenn sich die Betriebsmitnehmerscheibe (128) aufgrund des zweiten Sperrklinkenradsystems (146) mit Getriebedeckel (148), das so konfiguriert ist, dass es eine Rückwärtsbewegung der Betriebsantriebsscheibe (144) verhindert, gegenläufig dreht;
wobei die Betriebsantriebsscheibe (144) ferner so konfiguriert ist, dass sie eine Steuerscheibe (150) und eine Keramikscheibe (154) des zweiten Mechanismus (130) direkt antreibt, die so angeordnet sind, dass sie bei einem bestimmten Drehbetrag ein Aufbereitungsereignis auslösen;
wobei die Menge der vorbestimmten Wassermenge, die gemessen werden muss, um die Aufbereitung eines der Tanks (1, 2) einzuleiten, mit der Hublänge des Führungselements (126) entlang des Schneckenzahns (132) in Beziehung steht;
wobei ein Einstellknopf (124) des Einstellmechanismus (122) so konfiguriert ist, dass er sich dreht und eine Rückwärts- oder Vorwärtsbewegung der Schneckennocke (134) relativ zu der Betriebsmitnehmerscheibe (128) bewirkt, um die Position der Schneckennocke (134) relativ zu der Betriebsmitnehmerscheibe (128) einzustellen, was zu einer unterschiedlichen Hubstartposition des Führungselements (126) entlang der Oberfläche des Schneckenzahns (132) führt; und
wobei der Einstellmechanismus (122) innerhalb eines vorbestimmten Einstellbereichs stufenlos einstellbar ist.

2. Wasserenthärtungsanlage nach Anspruch 1, wobei der Einstellmechanismus (122) von einer Außenseite der Wasserenthärtungsanlage manuell einstellbar ist.

## Revendications

1. Appareil adoucisseur d'eau comprenant :
deux réservoirs d'adoucisseur d'eau en résine (1, 2) ayant chacun un orifice supérieur (6) et un orifice inférieur (6), les orifices inférieurs (6) des deux réservoirs d'adoucisseur d'eau (1, 2) étant reliés par les chambres respectives (9, 10) d'un clapet-navette (11) à une entrée d'eau (12) fournissant une alimentation en eau à adoucir, lesdits orifices inférieurs (6) étant également reliés par un raccord (13) du clapet-navette (11) à un drain via un compteur de régénération (23) qui fait partie d'un système de régénération pour régénérer alternativement lesdits deux réservoirs d'adoucisseur d'eau (1, 2), les orifices supérieurs (6) des deux réservoirs d'adoucisseur d'eau (1, 2) étant reliés par des clapets anti-retour respectifs (14, 15) à une entrée commune d'un débitmètre à eau (16), la sortie dudit débitmètre à eau (16) conduisant par un tuyau de sortie d'eau adoucie (17) à une sortie d'eau adoucie de l'appareil adoucisseur d'eau ;
un réservoir de saumure (18) et une vanne de saumure (19) reliés à une entrée d'injection (20) d'un injecteur (21) qui a un orifice d'entrée (22) relié au tuyau de sortie de l'eau adoucie (17) et un orifice de sortie (24) menant, par l'intermédiaire d'autres clapets anti-retour respectifs (25, 26), aux orifices supérieurs (6) des deux réservoirs d'adoucisseur d'eau (1, 2), l'injecteur (21) comprenant un conduit entre l'orifice d'entrée (22) et l'orifice de sortie (24) formé pour fournir une restriction qui fait que la saumure du réservoir de saumure (18) est aspirée dans l'injecteur (21) et mélangée à l'eau adoucie s'écoulant de l'orifice de sortie (24), ladite eau adoucie étant reçue à l'orifice d'entrée (22) de l'injecteur (21) à partir du tuyau de sortie de l'eau adoucie (17) ;
le débitmètre à eau (16) configuré pour commander deux vannes de service (27, 28) afin que lesdits deux réservoirs d'adoucisseur d'eau (1, 2) soient rendus inopérants pour adoucir l'eau à différents intervalles respectifs de sorte qu'au moins un réservoir d'adoucisseur d'eau (1, 2) soit opérationnel en permanence, les deux vannes de service (27, 28) pouvant commander le clapet-navette (11) par l'intermédiaire des orifices de commande respectifs (31, 32) du clapet-navette (11), ledit débitmètre à eau (16) étant configuré pour mesurer un débit d'eau de sorte qu'à chaque fois qu'une quantité d'eau prédéterminée a été mesurée, la régénération de l'un des réservoirs est déclenchée ;
ledit débitmètre à eau (16) faisant partie d'un compteur à déplacement d'eau (100) qui comprend également le compteur de régénération (23) et inclut un mécanisme de réglage (122) pour ajuster la quantité d'eau prédéterminée devant être mesurée pour déclencher la régénération de l'un des réservoirs de l'adoucisseur d'eau (1, 2), le compteur à déplacement d'eau (100) renfermant une chambre (110) pour recevoir un flux d'eau, la chambre (110) ayant une entrée (112) et une sortie (114), la chambre (110) comportant un premier mécanisme (116) faisant partie du débitmètre à eau (16) entraîné par l'eau s'écoulant par l'entrée (112) vers la sortie (114), un volume fini prédéterminé d'eau s'écoulant par l'entrée (112) vers la sortie (114) amenant le premier mécanisme (116) à effectuer une révolution autour de la chambre (110) pour mesurer une quantité de fluide s'écoulant dans la chambre (110) au fil du temps, dans lequel un nombre de volumes finis d'eau qui est mesuré est lié à une longueur de course d'un élément de guidage (126) d'un disque suiveur de service (128), le disque suiveur de service (128) étant compris dans un deuxième mécanisme (130) du compteur de déplacement d'eau (100) pour initier la régénération de l'un des deux réservoirs d'adoucisseur d'eau (1, 2) par le compteur de régénération (23) en réponse au comptage d'une quantité d'eau sélectionnée ou calculée s'écoulant dans la chambre (110) du compteur volumétrique (100), le mécanisme de réglage (122) comprenant une came escargot rotative (134) entraînée par le premier mécanisme (116) à travers un mécanisme d'engrenage (118, 120, 136, 138) qui provoque le déplacement de l'élément de guidage (126) du disque suiveur de service (128) le long de la surface d'une dent d'escargot (132) de la came d'escargot rotative (134) pour faire tourner le disque suiveur de service (128) vers l'avant jusqu'à ce que l'élément de guidage (126) tombe de la surface de la dent d'escargot (132), dans lequel un moyen de sollicitation (14) provoque la contre-rotation du disque suiveur de service (128) et son retour à la position de départ avec l'élément de guidage (126) en contact avec la dent d'escargot (132) à un point de base de la dent d'escargot (132) ou à proximité, le deuxième mécanisme (130) comprenant un premier mécanisme à rochets (142) entraîné par le disque suiveur de service (128), ledit mécanisme à rochets (142) engageant un disque d'entraînement de service (144) pour le faire tourner dans la même direction que le disque suiveur de service (128) de sorte que, une fois que le disque d'entraînement de service (144) a été tourné dans la direction avant dans une mesure suffisante, il déclenche la régénération de l'un des réservoirs d'adoucisseur d'eau (1, 2) ;
dans lequel le disque d'entraînement de service (144) est configuré pour se déplacer le long d'un deuxième système à rochets (146) avec un couvercle de boîte de vitesses (148), et pour conserver sa position de rotation vers l'avant lorsque le disque suiveur de service (128) tourne en contre-rotation en raison du deuxième système à rochets (146), le couvercle de boîte de vitesses (148) étant configuré pour empêcher le disque d'entraînement de service (144) de se déplacer vers l'arrière ;
le disque d'entraînement de service (144) est en outre configuré pour entraîner directement un disque de commande (150) et un disque en céramique (154) du deuxième mécanisme (130) qui sont disposés de telle sorte que, pour une quantité déterminée de rotation, ils déclenchent un événement de régénération ;
dans lequel la quantité d'eau prédéterminée devant être mesurée pour initier la régénération de l'un des réservoirs (1, 2) est liée à la longueur de la course de l'élément de guidage (126) le long de la dent de l'escargot (132) ;
dans lequel un bouton de réglage (124) du mécanisme de réglage (122) est configuré pour tourner et provoquer un mouvement vers l'avant ou vers l'arrière de la came d'escargot (134) par rapport au disque suiveur de service (128) afin d'ajuster la position de la came d'escargot (134) par rapport au disque suiveur de service (128), ce qui entraîne une position de départ de course différente de l'élément de guidage (126) le long de la surface de la dent d'escargot (132) ; et
dans lequel le mécanisme de réglage (122) est réglable en continu à l'intérieur d'une plage de réglage prédéterminée.

2. Appareil adoucisseur d'eau selon la revendication 1, dans lequel le mécanisme de réglage (122) est réglable manuellement depuis l'extérieur de l'appareil adoucisseur d'eau.
